# EUROPEAN PATENT SPECIFICATION

(11) **EP 3 757 714 B1**
(45) Date of publication and mention of the grant of the patent: **26.10.2022**
(21) Application number: 20182455.4
(22) Date of filing: 26.06.2020
(51) Int. Cl.: G05D 1/02, G06N 3/00

(54) **MACHINE LEARNING METHOD AND MOBILE ROBOT**
MASCHINENLERNVERFAHREN UND MOBILER ROBOTER
PROCÉDÉ D'APPRENTISSAGE PAR MACHINE ET ROBOT MOBILE

(30) Priority: 28.06.2019 JP 2019121762
(43) Date of publication of application: 30.12.2020
(73) Proprietor: Toyota Jidosha Kabushiki Kaisha, Toyota-shi, Aichi-ken 471-8571 (JP)
(72) Inventor: TAKAHASHI, Taro, Toyota-shi, Aichi-ken 471-8571 (JP)
(74) Representative: D Young & Co LLP

(56) References cited:
- US-A1- 2017 095 923
- Rouhollah Rahmatizadeh ET AL: "Learning Manipulation Trajectories Using Recurrent Neural Networks Value of information View project Unsupervised Meta Learning View project Learning real manipulation tasks from virtual demonstrations using LSTM", , 15 September 2016 (2016-09-15), XP055733585, Retrieved from the Internet: URL:https://www.researchgate.net/profile/R ouhollah_Rahmatizadeh/publication/30184601 8_Learning_Manipulation_Trajectories_Using _Recurrent_Neural_Networks/links/57ed8ee90 8ae2df36403375c/Learning-Manipulation-Traj ectories-Using-Recurrent-Neural-Networks.p df [retrieved on 2020-09-24]
- ONG S K ET AL: "Methodologies for immersive robot programming in an augmented reality environment", PROCEEDINGS OF THE 4TH INTERNATIONAL CONFERENCE ON COMPUTER GRAPHICS AND INTERACTIVE TECHNIQUES IN AUSTRALASIA AND SOUTHEAST ASIA, ACM, NEW YORK, NY, US, 29 November 2006 (2006-11-29), pages 237-244, XP058095075, DOI: 10.1145/1174429.1174470 ISBN: 978-1-59593-564-9

## Description

### BACKGROUND

The present disclosure relates to a machine learning method and a mobile robot.

Mobile robots that autonomously move to a target point are known. The mobile robot determines a path to the target point using an environmental map and moves along the path. For example, Japanese Unexamined Patent Application Publication No. 2009-291540 discloses a technique for evaluating the possibility that a robot may collide with an obstacle in a moving path. Further, Japanese Unexamined Patent Application Publication No. 2017-204145 discloses a technique for generating a force map showing a repulsive force indicating that the own vehicle travels while avoiding an obstacle indicated by environmental information and a guiding force indicating that the own vehicle travels so as to be guided in accordance with the environmental information, and planning a travel route of the own vehicle based on the generated force map.

Rouhollah Rahmatizadeh et al: "Learning manipulation trajectories using recurrent neural networks", "Learning real manipulation tasks from virtual demonstrations using LSTM", 15 September 2016, discloses "Robots assisting disabled or elderly people in activities of daily living must perform complex manipulation tasks" and does not disclose, at least, a moving second obstacle or a movement step of making the second obstacle move in accordance with a predetermined condition.

S.K. Ong et al: "Methodologies for immersive robot programming in an augmented reality environment", 29 November 2006, pages 237-244, discloses "Advancements in robotics have gained much momentum in recent years".

### SUMMARY

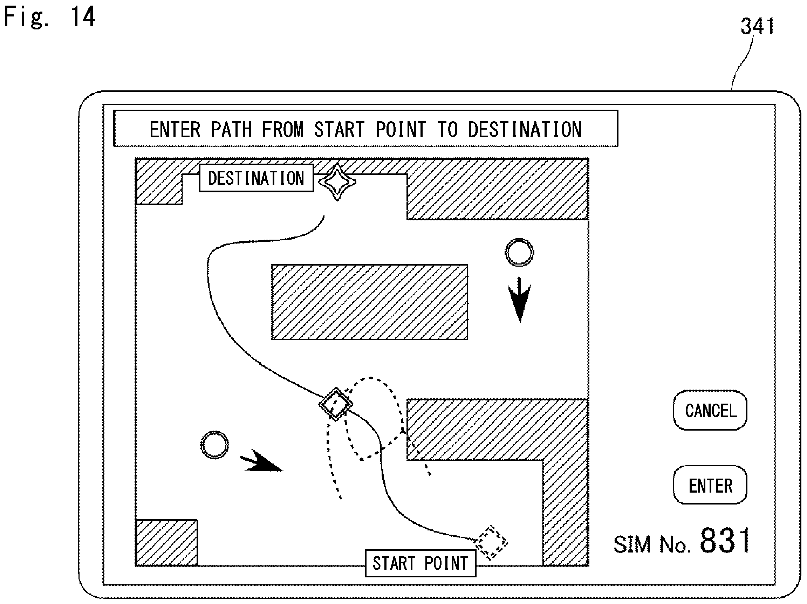

The present invention is defined in the appended independent claims. Advantageous features are set out in the appended dependent claims. The embodiments relating to Fig. 14 represent embodiments of the present invention. Any embodiments or examples of the following description which are not within the scope of the appended claims are provided for illustrative purposes only. When a mobile robot autonomously moves to a destination, map information is often analyzed to generate a moving path. However, the map information does not include information about obstacles that move (or operate) in an environment, such as people or other mobile robots, and only information about stationary obstacles is described in the map information. Accordingly, even when the mobile robot moves along a generated moving path, it is necessary to analytically generate an avoidance path for avoiding a moving obstacle every time the moving obstacle is detected. That is, as both the moving path and the avoidance path are analytically generated, it takes a long time for the calculation of the moving path and the avoidance path. This limits the mobility performance of the mobile robot.

The present disclosure has been made to solve the above-described problem, and it provides a practical neural network machine learning method for enabling a mobile robot to perform a smooth autonomous movement, and a mobile robot that autonomously moves using a learned neural network learned by the neural network machine learning method.

A first exemplary aspect is a neural network machine learning method for causing a computer to function so as to output a path for a mobile robot to reach a destination based on provided map information and information about a detected mobile body, the neural network machine learning method including:
a first arrangement step of arranging a stationary first obstacle and a moving second obstacle in a virtual space;
a second arrangement step of arranging a current position and a destination of the mobile robot in the virtual space;
a movement step of making the second obstacle move in accordance with a predetermined condition; and
a reception step of receiving, from a user, a designation of a moving path for the mobile robot to go to the destination from the current position while avoiding the stationary first obstacle and the moving second obstacle, in which
learning is performed using teaching data accumulated by repeatedly executing the above steps.

If a moving path is provided by the user's designation in a simulation in this way, it is possible to accumulate more teaching data than when it is created by using an actual mobile robot. That is, it is possible to generate a practical neural network for enabling a mobile robot to perform a smooth autonomous movement.

In the aforementioned reception step, when the mobile robot moving along the moving path designated by the user crosses the first obstacle, the moving path is corrected so that the mobile robot does not cross the first obstacle again.

By this configuration, the user can roughly designate a moving path, and accordingly teaching data can be accumulated in a short period of time.

Further, when the mobile robot that moves along the moving path designated by the user comes into contact with the second obstacle, a designation of a moving path by the user is received again.

As the second obstacle is a moving obstacle, it is more appropriate to provide, as teaching data, an accurate avoidance path designated by the user.

A generating step of generating a temporary moving path in which the first obstacle is avoided from the current position to the destination may be further included between the second arrangement step and the movement step. In the movement step, the second obstacle may be moved and the mobile robot may be moved from the current position along the temporary moving path in accordance with a preset condition.

If a moving path to reach the destination from the current position while the stationary first obstacle is avoided is generated by other algorithms or the like, it is only necessary to perform learning of generation of a path for avoiding the moving second obstacle, and accordingly machine learning can be performed with less teaching data.

A second exemplary aspect is a mobile robot in which a learned neural network learned by the above machine learning method is implemented, the mobile robot including:
an acquisition unit configured to acquire map information in which a first obstacle is described, and a destination;
a detection unit configured to detect the second obstacle that moves in the vicinity of the mobile robot;
a calculation unit configured to input the map information and the destination that are acquired by the acquisition unit and detection information about the second obstacle detected by the detection unit to the learned neural network and calculate a path to reach the destination; and
a movement control unit configured to control the mobile robot so that it moves along the path calculated by the calculation unit.

The mobile robot that is controlled in this way can quickly determine a path along which the mobile robot should move, and thus can perform a smooth autonomous movement.

According to the present disclosure, it is possible to provide a practical neural network machine learning method for enabling a mobile robot to perform a smooth autonomous movement, and a mobile robot that autonomously moves using a learned neural network learned by the neural network machine learning method.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a conceptual diagram showing an entire system in which a machine learning method according to an embodiment is performed;
Fig. 2 is a perspective view showing an outward appearance of a mobile robot;
Fig. 3 is a control block diagram of the mobile robot;
Fig. 4 is a control block diagram of a simulation PC;
Fig. 5 is a conceptual diagram for explaining a data structure that describes a target space;
Fig. 6 is an explanatory diagram for explaining generation of teaching data in a first learning step;
Fig. 7 is a conceptual diagram for explaining a concept of learning in the first learning step;
Fig. 8 is a conceptual diagram showing a state of learning in a second learning step;
Fig. 9A is an explanatory diagram for explaining generation of teaching data in the second learning step;
Fig. 9B is an explanatory diagram for explaining generation of teaching data in the second learning step;
Fig. 9C is an explanatory diagram for explaining generation of teaching data in the second learning step;
Fig. 10 is a conceptual diagram for explaining a concept of learning in the second learning step;
Fig. 11 is a flowchart for mainly explaining processing performed in the first learning step in the machine learning method according to the embodiment;
Fig. 12 is a flowchart for mainly explaining processing performed in the second learning step in the machine learning method according to the embodiment;
Fig. 13 is a flowchart for explaining processing of an autonomous movement of the mobile robot in which a learned neural network according to the embodiment is implemented; and
Fig. 14 is an explanatory diagram for explaining generation of teaching data in another example.

### DESCRIPTION OF EMBODIMENTS

Hereinafter, although the present disclosure will be described with reference to an embodiment of the present disclosure, the present disclosure according to claims is not limited to the following embodiment. Moreover, all the components described in the following embodiment are not necessarily essential as means for solving problems.

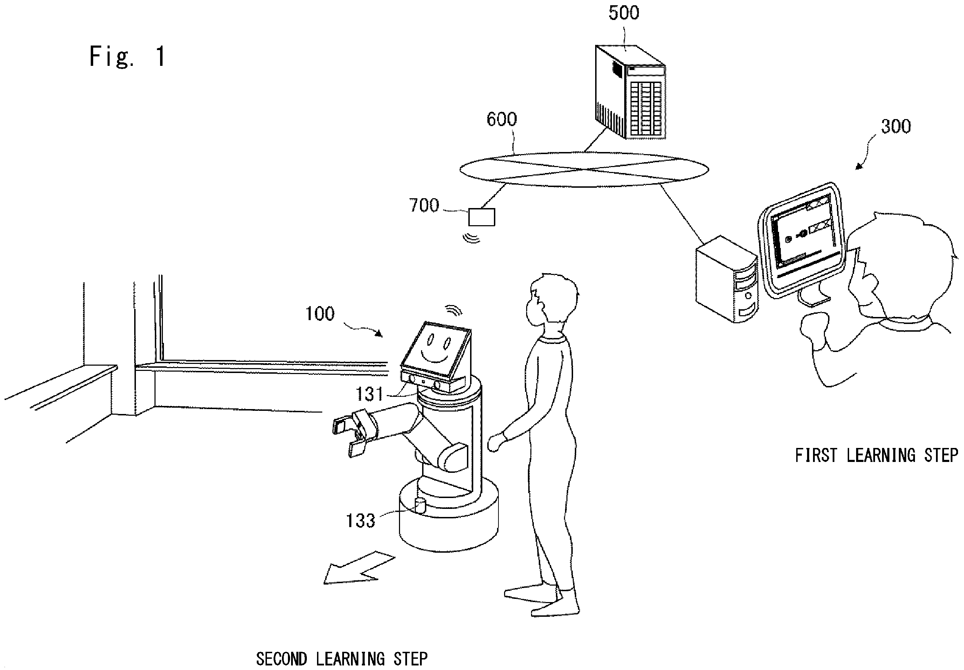

Fig. 1 is a conceptual diagram showing an entire system in which a machine learning method according to this embodiment is performed. The system generally functions as a machine learning apparatus that performs machine learning of a neural network. In this embodiment, the neural network that performs machine learning is a path-generating neural network (hereinafter referred to as a path-generating NN) that causes a computer to function so as to output a path to a destination along which a mobile robot should move when provided map information, information about a detected mobile body, and the like are received.

The system includes a simulation PC 300 that performs only a first learning step of the path-generating NN and a mobile robot 100 that performs a subsequent second learning step. The mobile robot 100 is connected to an Internet 600 via a radio unit 700. Further, the simulation PC 300 and a system server 500 are also connected to the Internet 600.

In this example, it is assumed that the environment in which the first learning step is performed and the environment in which the second learning step is performed are away from each other and can be connected to each other via the Internet 600. Specifically, the path-generating NN that has been caused to learn the first learning step by the simulation PC 300 is implemented in the mobile robot 100 via the system server 500. Note that the path-generating NN may be transferred from the simulation PC 300 to the mobile robot 100 using a removable memory, instead of via the Internet 600. Further, if the environment in which the first learning step is performed is close to the environment in which the second learning step is performed, near field communication can be used.

It is desired that the environment in which the second learning step is performed be an environment in which the mobile robot 100 is actually operated or an environment similar thereto. For example, when a plurality of mobile robots 100 will be operated in environments different from each other, first, the simulation PC 300 collectively causes the path-generating NNs to perform learning in the first learning step. Then, the path-generating NN may be implemented in each mobile robot 100 to perform learning of the second learning step in the respective environments in which the mobile robots 100 are operated.

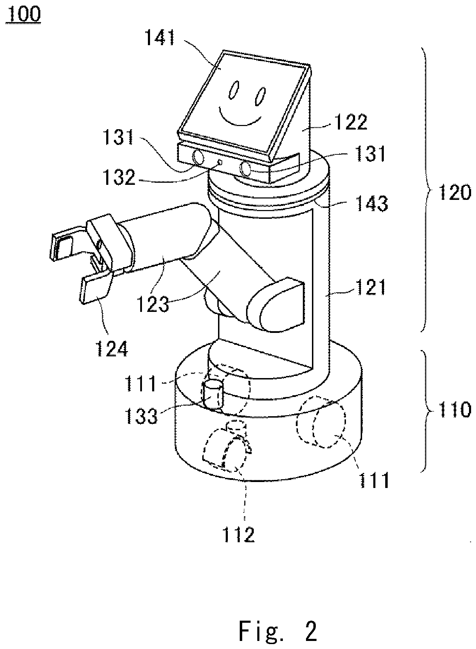

Fig. 2 is a perspective view showing an outward appearance of the mobile robot 100, which is an example of a mobile robot in which the path-generating NN is implemented. The mobile robot 100 is mainly composed of a movable base part 110 and a main-body part 120. The movable base part 110 supports two driving wheels 111 and a caster 112, each of which is in contact with the traveling surface, inside its cylindrical housing. The two driving wheels 111 are arranged so that the centers of their rotation axes coincide with each other. Each of the driving wheels 111 is rotationally driven by a motor (not shown) independently of each other. The caster 112 is a driven wheel and is disposed so that its pivotal axis extending from the movable base part 110 in the vertical direction axially supports the wheel at a place away from its rotation axis. Further, the caster 112 follows the movable base part 110 in accordance with the direction in which the movable base part 110 moves.

The movable base part 110 includes a laser scanner 133 in a peripheral part of its top surface. The laser scanner 133 scans a certain range on the horizontal plane at intervals of a certain stepping angle and outputs information as to whether there is an obstacle in each direction. Further, when there is an obstacle, the laser scanner 133 outputs a distance to the obstacle. By analyzing the continuous output from the laser scanner 133, the mobile robot 100 can recognize whether the obstacle is moving, and can further recognize, if the obstacle is moving, the moving direction and the moving speed of the obstacle.

The main-body part 120 mainly includes a body part 121 mounted on the top surface of the movable base part 110, a head part 122 placed on the top surface of the body part 121, an arm 123 supported on the side surface of the body part 121, and a hand 124 disposed at the tip of the arm 123. The arm 123 and the hand 124 are driven via motors (not shown) and grasp various objects in a controlled posture. The body part 121 can be rotated around a vertical axis with respect to the movable base part 110 by a driving force of a motor (not shown). A pressing unit 143 is provided on the upper part of the body part 121 in the circumferential direction. The pressing unit 143 is an annular-shaped pressing switch group including a plurality of pressing switches arranged along the circumferential direction. The pressing unit 143 detects from which of the radial directions the pressing unit 143 has been pressed with respect to the body part 121.

The head part 122 mainly includes a stereo camera 131, a microphone 132, and a display panel 141. The stereo camera 131 has a structure in which two camera units having the same angle of view are arranged so as to be away from each other, and outputs imaging signals of images taken by the respective camera units. The microphone 132 converts a sound generated in a surrounding environment or a voice of a user into a voice signal. The display panel 141 is, for example, a liquid crystal panel, and displays an animated face of a preset character and displays information about the mobile robot 100 in the form of text or by using icons.

The head part 122 can be rotated around a vertical axis with respect to the body part 121 by a driving force of a motor (not shown). Therefore, the stereo camera 131 can takes an image of a target object located in a desired direction. Further, the display panel 141 can show a display content in a desired direction. By analyzing the imaging signals of the images taken by the stereo camera 131, the mobile robot 100 can recognize the distance from the mobile robot 100 to the surrounding obstacle and the direction in which the surrounding obstacle is located, and can further recognize, when the obstacle is moving, the moving direction and moving speed of the obstacle.

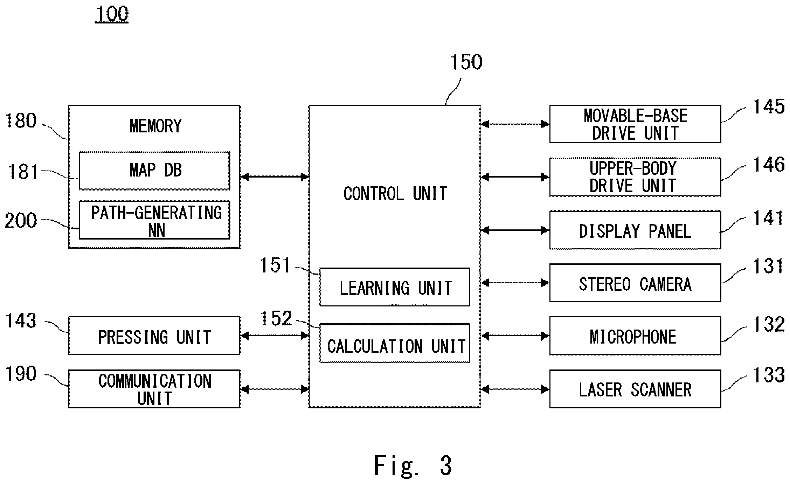

Fig. 3 is a control block diagram of the mobile robot 100. A control unit 150 is, for example, a CPU and is included in, for example, a control box disposed in the body part 121. A movable-base drive unit 145 includes the driving wheels 111, and a driving circuit and a motor for driving the driving wheels 111. The control unit 150 sends a drive signal to the movable-base drive unit 145, thereby controlling the rotation of the driving wheels. Further, the control unit 150 receives a feedback signal of an encoder or the like from the movable-base drive unit 145 and recognizes the moving direction and moving speed of the movable base part 110.

An upper-body drive unit 146 includes the arm 123 and the hand 124 as grasping units, the body part 121, the head part 122, and driving circuits and motors for driving these components. The control unit 150 sends a drive signal to the upper-body drive unit 146, thereby achieving a grasping motion and a change of the posture. Further, the control unit 150 receives a feedback signal of an encoder or the like from the upper-body drive unit 146, and recognizes the positions of the arm 123 and the hand 124 and the moving speeds thereof, and orientations and rotation speeds of the body part 121 and the head part 122.

The display panel 141 displays an image generated by the control unit 150. The control unit 150 generates an image signal of the character or the like and displays an image thereof on the display panel 141. When the display panel 141 includes a touch panel, the display panel 141 transmits a touch signal to the control unit 150.

The stereo camera 131 takes an image of the surrounding environment in accordance with a request from the control unit 150 and passes the imaging signal to the control unit 150. The control unit 150 performs image processing using the imaging signal. The microphone 132 converts a sound generated in the surrounding environment or a voice of a user into a voice signal and passes the converted signal to the control unit 150. The laser scanner 133 detects whether there is an obstacle in the direction in which the mobile robot 100 moves in accordance with a request from the control unit 150 and passes a detection signal, which is a result of the detection, to the control unit 150. The stereo camera 131 and the laser scanner 133 also function as a detection unit that detects an obstacle moving in the vicinity of the mobile robot 100.

A memory 180 is a nonvolatile storage medium. For example, a solid-state drive is used for the memory 180. The memory 180 stores, in addition to a control program for controlling the mobile robot 100 and a machine learning program for performing the second learning step, various parameter values, functions, lookup tables, etc. used for the control and the calculation. In particular, the memory 180 includes a map DB 181 that is a database of map information describing a space in which the mobile robot 100 is scheduled to autonomously move, and a storage area for a path-generating NN 200 that is learning or a learned path-generating NN 200.

For example, the map DB 181 accumulates map information sent from the system server 500. The control unit 150 reads information of a map in which the mobile robot 100 exists from the map DB 181 and refers to the read map information. The path-generating NN 200 is sent from the system server 500 as described above at the start of the machine learning of the second learning step. Alternatively, in the operation phase of the mobile robot 100, a copy of the learned path-generating NN in which the machine learning of the second learning step has been performed by a mobile robot 100 other than the above one under the same environment as that in the above mobile robot 100 may be used. When the control unit 150 performs machine learning of the second learning step in the learning phase and when the control unit 150 determines a path to the destination in the operation phase, the control unit 150 reads the path-generating NN 200 from a memory 380 and performs a calculation that will be described later.

The pressing unit 143 outputs a pressing signal indicating which of the plurality of pressing switches arranged in an annular shape has been pressed. The control unit 150 recognizes from which of the radial directions the pressing unit 143 has been pressed based on the received pressing signal. A communication unit 190, which is, for example, a wireless LAN unit, performs radio communication with the radio unit 700. The communication unit 190 receives map information and the path-generating NN 200 sent from the system server 500 and passes them to the control unit 150.

The control unit 150 executes a control program and a machine learning program that are read from the memory 180, thereby performing control and processing of the whole mobile robot 100. The control unit 150 also functions as a function calculation unit that performs various calculations related to the control and the processing. A learning unit 151 and a calculation unit 152 are examples of the function calculation unit. The learning unit 151 reads the path-generating NN 200 that is learning from the memory 380 and performs machine learning of the second learning step. The calculation unit 152 reads the learned path-generating NN 200 from the memory 380 and calculates a path to reach the destination.

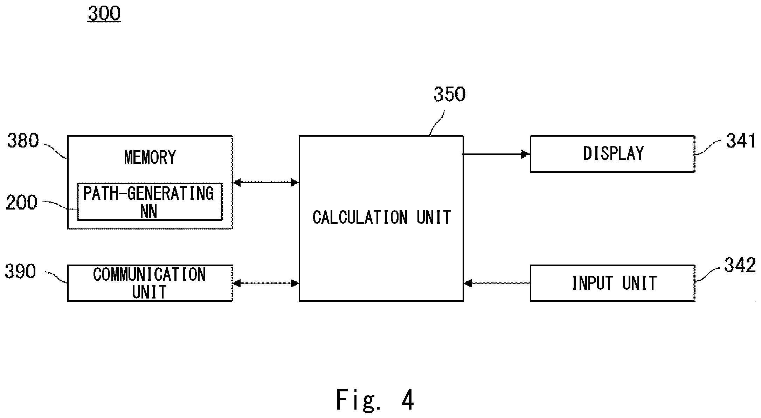

Fig. 4 is a control block diagram of the simulation PC 300. A calculation unit 350 is, for example, a CPU, and controls the entire simulation PC 300. A display 341 is, for example, a liquid crystal panel, and displays an image signal generated by the calculation unit 350. An input unit 342 is, for example, a touch panel superimposed on the display 341, a keyboard, or a mouse, and converts an operation input of a user into an electric signal and then transfers the converted signal to the calculation unit 350.

The memory 380 is a nonvolatile storage medium. For example, a solid-state drive is used for the memory 380. The memory 380 stores, in addition to a control program for controlling the mobile robot 100 and a machine learning program for performing the first learning step, various parameter values, functions, lookup tables, etc. used for the control and the calculation. In particular, the memory 380 includes a storage area for the path-generating NN 200 that is learning or the unlearned path-generating NN 200. The calculation unit 350 reads the path-generating NN 200 that is learning or the unlearned path-generating NN 200 from memory 380 and performs machine learning of the first learning step.

A communication unit 390 is, for example, a wired LAN unit, and enables connection to the Internet 600. The communication unit 390 passes the path generation NN 200, which has finished the learning of the first learning step, to the system server 500.

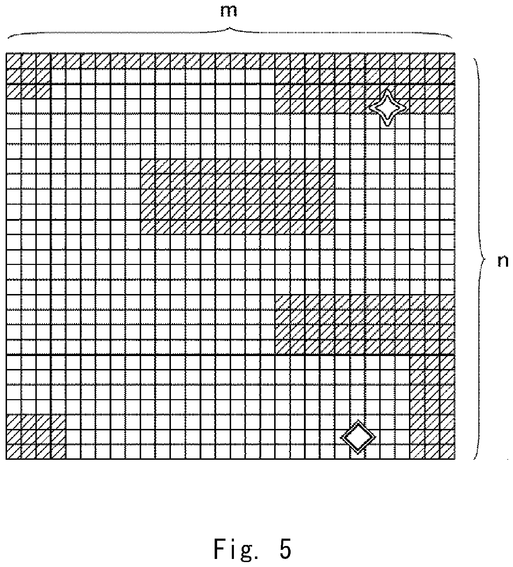

Next, map information is described. The map information includes a data structure that describes the state of a target space. Fig. 5 is a conceptual diagram for explaining the data structure that describes a target space.

The target space in which the mobile robot 100 moves is divided into a plurality of cells as a moving plane in which the mobile robot moves and is thereby two-dimensionally expressed. In the example shown in Fig. 5, the moving plane is divided into a square cell having a width of m cells (m is a natural number of 2 or more) and a height of n cells (n is a natural number of 2 or more). An address indicating the position with respect to the entire moving plane is individually assigned to each cell.

In the example shown in Fig. 5, a cell indicated by oblique lines (i.e., a hatched cell) indicates that there is a stationary obstacle (hereinafter sometimes referred to as a first obstacle) in the target space. That is, the mobile robot 100 cannot pass through the hatched cells. Further, a part of the mobile robot 100 is not allowed to interfere with the hatched cell during the movement of the mobile robot 100. For example, cells corresponding to the positions and the sizes of a table placed near the center of the room, a shelf installed near the wall, four pillars in the room, and the like have been hatched as the first obstacles.

A start point (a diamond-shaped mark) and a destination (a star-shaped mark) of the mobile robot are provided to the moving plane of the target space represented by the above-described data structure. The size of the diamond-shaped mark indicating the start point is determined while the area occupied by the mobile robot (the mobile robot 100 in this embodiment) on the moving plane is taken into consideration. That is, all paths, which can sweep the diamond-shaped mark at the start point to the position of the star-shaped mark without the outer shape of the diamond-shaped mark coming into contact with the hatched cells, are candidate moving paths. A user determines which path is the most suitable among such candidate moving paths and inputs the determined path. Note that the user in this example may be a person who actually uses the mobile robot 100, which is a person who provides learning data by using a system that employs the machine learning method according to the present disclosure, or may be an assistant who does not actually use the mobile robot 100.

Each time the user repeats such an operation, teaching data for the first learning step of the path-generating NN 200 is generated. That is, the teaching data for the first learning step uses, as input values, the layout of the first obstacle disposed on the moving plane divided into m × n cells, and the set start point and destination, and uses, as a correct output value, the moving path determined by the user.

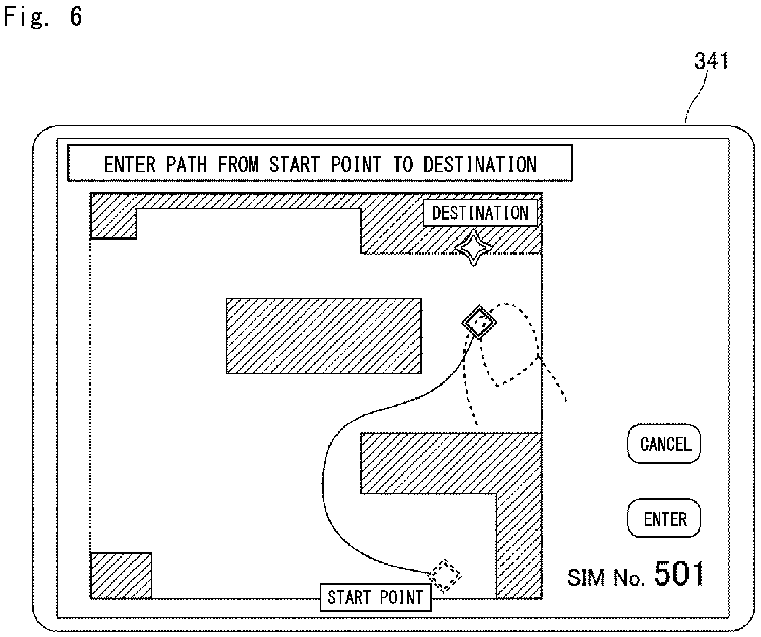

Fig. 6 is an explanatory diagram for specifically explaining generation of teaching data in the first learning step, and shows a state of the display 341 of the simulation PC 300.

The calculation unit 350 randomly arranges the first obstacles on the moving plane divided into m × n cells. At this time, the first obstacles to be arranged may be limited in size and number in advance, assuming that the first obstacles are obstacles that can be actually located. For example, obstacles such as desks and cabinets are conceivable when the target space is an office, and obstacles such as machine tools and carrier devices are conceivable when the target space is the inside of a factory. The calculation unit 350 displays the first obstacle in the frame of the moving plane by hatching (i.e., oblique lines).

Further, the calculation unit 350 randomly determines positions of the start point and the destination and displays a diamond-shaped mark (the start point) and a star-shaped mark (the destination). The start point is selected and determined from among the cells in which no first obstacles are arranged, and the destination is selected and determined from among the cells in which no first obstacles are arranged and the cells at the peripheral part of the first obstacle. As described above, the size of the diamond-shaped mark is determined so that it corresponds to the area of the mobile robot in which the path-generating NN 200 is implemented. Note that basic conditions such as the size of the moving plane, the limitations related to the first obstacle, and the size of the mobile robot are designated in advance by a user.

A touch panel is superimposed on the display 341 as the input unit 342. When a user is prompted to, for example, "enter the path from the start point to the destination" as shown in Fig. 6, he/she drags the diamond-shaped mark on the display 341 to move it to the star-shaped mark. The trajectory generated by dragging is displayed as a line. When a determination button is touched, the calculation unit 350 records this trajectory as a correct moving path determined by the user. Note that when the diamond-shaped mark comes into contact with the first obstacle indicated by hatching during the dragging, the calculation unit 350 requests the user to retry entering the path from the start point to the destination.

The calculation unit 350 records the set of the layout, the start point, the destination, and the correct moving path of the first obstacle generated as described above in the memory 380 as one teaching data. The calculation unit 350 causes a user to repeatedly perform such an operation until a predetermined number of teaching data are collected or until the user gives instructions to terminate the operation.

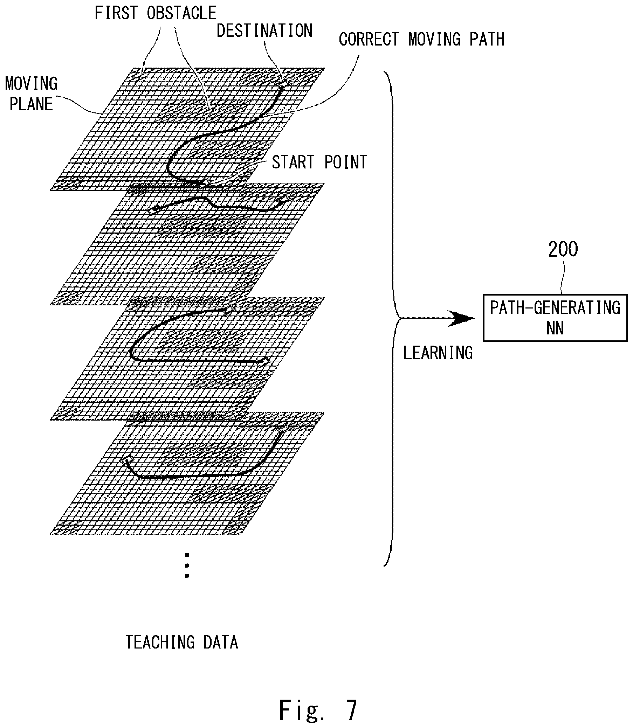

Fig. 7 is a diagram for explaining a concept of learning in which the path-generating NN 200 learns using teaching data in the first learning step. When teaching data is prepared by repeating the operation shown in Fig. 6, the path-generating NN 200 is caused to perform learning by supervised learning. As described above, the input values given to the path-generating NN 200 here are the layout of the first obstacles arranged on the moving plane divided into m × n cells and the set start point and destination, and it is assumed that there is no moving obstacle. The calculation unit 350 evaluates an error between the moving path output by the path-generating NN 200 that is learning and the correct moving path, and updates the weight of each edge using an error backpropagation method so that the error between the moving path and the correct moving path is reduced. The error is evaluated by, for example, the sum of the distances between reference points provided at equal intervals between the start point and the destination, and it is evaluated that the smaller the sum is, the closer the moving path is to the correct answer.

In the above-described example, the learning of the path-generating NN 200 is collectively performed after a certain number of teaching data pieces are collected. However, the calculation unit 350 may perform learning of the path-generating NN 200 every time teaching data is generated. The path-generating NN 200 that has completed the first learning step is implemented in the mobile robot 100 via the Internet 600 as described above.

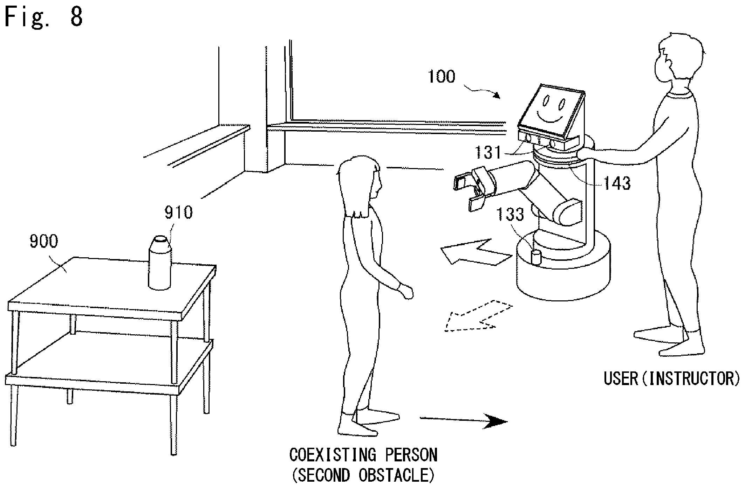

Fig. 8 is a conceptual diagram showing a state of learning in the second learning step. As described above, it is desired that the environment in which the second learning step is performed be an environment in which the mobile robot 100 is actually operated or an environment similar thereto. That is, the second learning step is a step of learning how to deal with a moving obstacle (hereinafter sometimes referred to as a second obstacle) that can actually be generated in an actual environment or an environment similar thereto in accordance with the future operation of the mobile robot 100. Note that a user who performs the second learning step may be different from a user who has performed the first learning step. Further, a person who is near the mobile robot 100 may perform the second learning step, or a person who is distant from the mobile robot 100 may perform the second learning step.

The mobile robot 100 has acquired map information of the space in which the second learning step is performed. That is, the map DB 181 includes map information in which the first obstacles such as a table and a pillar that are actually arranged are described on the moving plane divided into m × n cells. For example, a table 900 shown in Fig. 8 is described in the map information as the first obstacle.

The learning unit 151 sets the current position as a start point, and sets a cell randomly selected from the cells in which no first obstacles are arranged and the cells at the peripheral part of the first obstacles as a destination. Then, the learning unit 151 generates a moving path to the destination using the path-generating NN 200. Once the learning unit 151 generates a moving path, it transmits a drive signal to the movable-base drive unit 145 to move the mobile robot 100 along the moving path.

For example, when the destination is a cell corresponding to the vicinity of a container 910 in Fig .8, the mobile robot 100 moves in the direction indicated by a dotted outline arrow along the moving path determined by the path-generating NN 200 if there is no second obstacle that is not described in the map information in the environment. However, when the stereo camera 131 or the laser scanner 133 detects a moving person who coexists in the direction in which the robot 100 moves, the learning unit 151 notifies a user, who is an instructor, of the detection and asks for an instruction as to a direction in which the mobile robot 100 should move. Note that the person who coexists in the direction in which the robot 100 moves is a person who can coexist in the environment in which the mobile robot 100 moves, and is one of the second obstacles for the mobile robot 100.

The user recognizes the situation, and then indicates, to the mobile robot 100, a direction in which the mobile robot 100 should avoid moving (hereinafter sometimes referred as an avoidance direction) so that it does not come into contact with the second obstacle. In this example, the user presses the pressing unit 143 in the direction in which the mobile robot 100 should avoid moving, thereby indicating that direction to the mobile robot 100. The learning unit 151 acquires the direction in which the pressing unit 143 is pressed and recognizes the direction in which the mobile robot 100 should avoid moving, such as the direction indicated by a solid outline arrow. The learning unit 151 calculates a moving path to reach the destination while the second obstacle is avoided based on the recognized direction in which the mobile robot 100 should avoid moving.

It can be said that the user at least indicates a part of the moving path to the destination directly or indirectly by pushing the pressing unit 143 in the avoidance direction in the way described above. The method for at least indicating a part of the moving path by the user is not limited to the pressing of the pressing unit 143, and various methods can be adopted. For example, the learning unit 151 can also analyze an action shown by the user from the output image of the stereo camera 131, thereby recognizing the direction indicated by the user. As an example, the learning unit 151 recognizes the direction in which the user points a finger, or the direction shown by a gesture as the avoidance direction. Alternatively, the learning unit 151 can analyze a voice uttered by the user from the voice signal output from the microphone 132 and recognize the direction indicated by the user. As an example, the learning unit 151 recognizes the avoidance direction from a voice such as "turn right 45 degrees".

When the mobile robot 100 includes a grip that can detect a pressing force and the direction thereof, the learning unit 151 can also analyze a force applied to the mobile robot 100 by the user gripping the grip and the direction of the force, and recognize the analyzed direction as an avoidance direction. When the mobile robot 100 includes such a grip to continuously detect the direction in which the user presses, or when a voice and a gesture are continuously analyzed, the learning unit 151 can also recognize the avoidance direction as an avoidance path indicated by the user instead of only recognizing the avoidance direction.

The second obstacle is not limited to a person who can coexist in the environment, but may be another mobile robot, indoor mobility, a robot arm, or an animal depending on the environment. That is, the mobile robot 100 can perform the second learning step in accordance with the second obstacle to be recognized in the environment operated in the future.

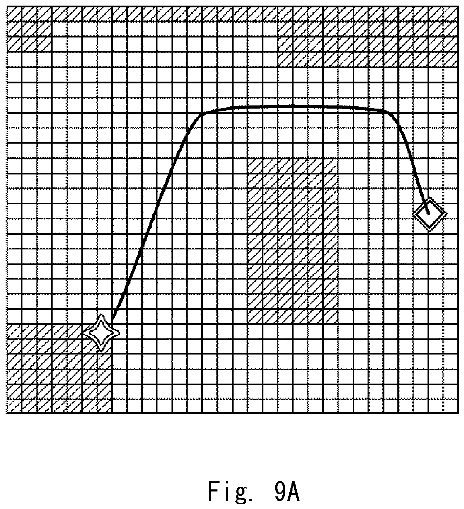

Figs. 9A to 9B are explanatory diagrams for explaining generation of teaching data in the second learning step. In Fig. 9A, the moving path from the start point to the destination generated by the path-generating NN 200 that has finished the first learning step is shown by a bold line. As described above, the start point is indicated by a diamond-shaped mark, and the destination is indicated by a star-shaped mark. At this stage, the second obstacle has not been considered.

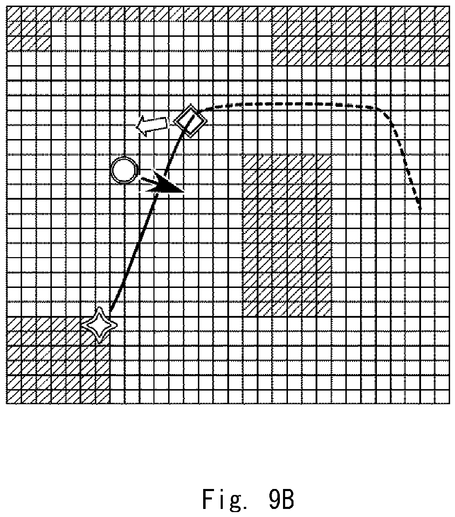

Fig. 9B shows a state at a point in time when the mobile robot 100 recognizes the second obstacle indicated by a double circle mark. The path indicated by a dotted line is a path in which the mobile robot 100 has already moved. The double circle mark is drawn over the cells corresponding to the position where the second obstacle is located. A black arrow indicates the motion vector of the second obstacle, and represents the direction in which the second obstacle moves and the moving speed of the second obstacle at a point in time when the mobile robot 100 recognizes the second obstacle. That is, when the second obstacle is detected, the learning unit 151 recognizes the relative position between the own robot and the second obstacle, the direction in which the second obstacle moves, and the moving speed of the second obstacle.

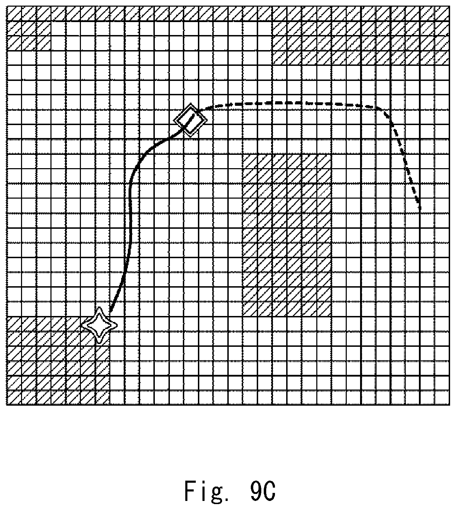

The outline arrow indicates the avoidance direction indicated by a user. The learning unit 151 generates an avoidance path that matches the avoidance direction indicated by the user using an existing algorithm. The avoidance path is a path by which the mobile robot 100 quickly and smoothly returns to the moving path shown in Fig. 9A, while a second obstacle is avoided from a point in which the second obstacle is found. Fig. 9C is a moving path connecting the avoidance path generated in this way to the original moving path after the mobile robot 100 returns.

The learning unit 151 records, in the memory 180, the moving path from a recognition point, in which the second obstacle indicated by a bold line in Fig. 9C is recognized, to the destination as a correct answer when the original moving path indicated by a bold line in Fig. 9B, the relative position between the own robot and the second obstacle, the direction in which the second obstacle moves, and the moving speed of the second obstacle are input values. That is, a set of such correct answers with respect to input values is recorded as one teaching data. Note that the original moving path indicated by a bold line in Fig. 9B is a moving path from the point in which the second obstacle is found to the destination. The learning unit 151 causes the user to repeatedly perform the above operation until a predetermined number of teaching data pieces are collected or the user instructs that the operation be terminated.

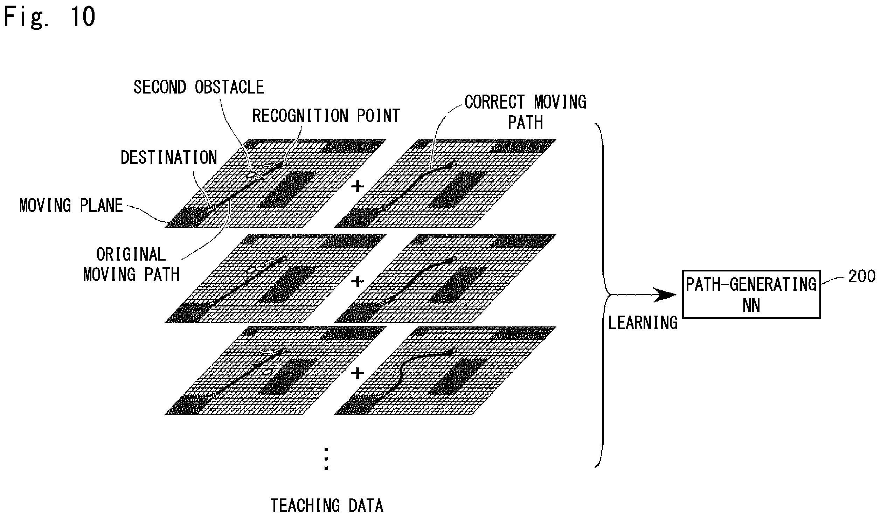

Fig. 10 is a diagram for explaining a concept of learning in which the path-generating NN 200 learns using teaching data in the second learning step. When teaching data is prepared by repeating the operation shown in Fig. 9, the path-generating NN 200 is caused to perform learning by supervised learning.

As described above, a correct label is a moving path connecting the avoidance path for avoiding the second obstacle to the original moving path after the mobile robot 100 returns, but may be a moving path to reach the destination without the mobile robot 100 returning to the original moving path depending on the situation of the second obstacle. The learning unit 151 evaluates an error between the moving path output by the path-generating NN 200 that is learning and the correct moving path, and updates the weight of each edge using the error backpropagation method so that the error between the moving path and the correct moving path is reduced. An evaluation of the error is performed, for example, based on the sum of the distances between reference points provided at equal intervals between the recognition point and the destination, and it is evaluated that the smaller the sum is, the closer the moving path is to the correct answer.

In the above-described example, the learning of the path-generating NN 200 is collectively performed after a certain number of teaching data pieces are collected. However, the learning unit 151 may perform learning of the path-generating NN 200 every time teaching data is generated. The path-generating NN 200 that has completed the second learning step is used for an operation performed by the mobile robot 100 that has actually performed the second learning step. Alternatively, the path-generating NN 200 is transferred to a mobile robot that autonomously moves in an environment similar to that of the mobile robot 100 and used for an operation performed by the mobile robot.

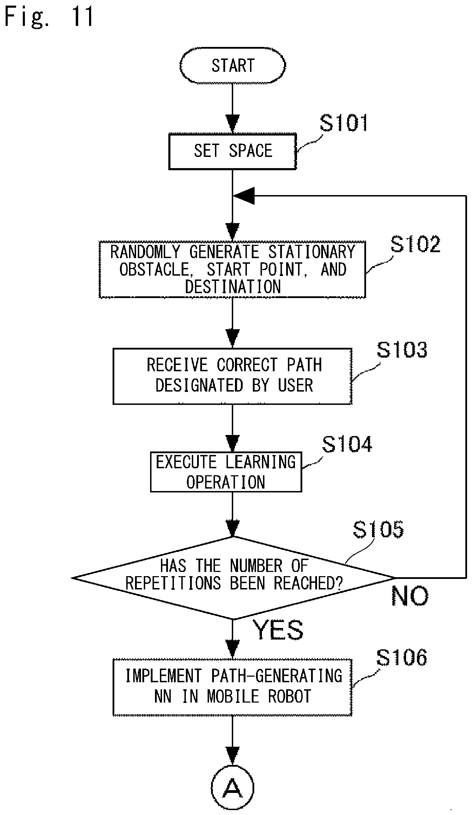

Next, processing performed in the machine learning method according to this embodiment is described with reference to flowcharts. Fig. 11 is a flowchart for mainly explaining the processing performed in the first learning step in the machine learning method according to this embodiment. The first learning step is performed by the simulation PC 300 as described above. A method for performing learning of the path-generating NN 200 every time teaching data is obtained is described below.

In Step S101, the calculation unit 350 of the simulation PC 300 assumes there is a moving space of the mobile robot in which the path-generating NN 200 which starts learning from now on is scheduled to be implemented when it finishes the learning, and performs settings related to the moving space. Specifically, the calculation unit 350 sets the size of one cell and the divided number of m × n cells in accordance with the designation performed by a user in order to define the area of the moving plane. Then, the calculation unit 350 generates an unlearned path-generating NN 200. Further, at this stage, the calculation unit 350 may receive basic conditions such as a size of the first obstacle, a limitation on a size and the number of first obstacles, and a size of the mobile robot. When the basic conditions are received, they are used as a processing condition in the subsequent processing.

In Step S102, the calculation unit 350 randomly generates a stationary obstacle, a start point, and a destination with respect to the set moving plane. Then, the generated stationary obstacle, start point, and destination are converted into video image signals as shown in Fig. 6 and displayed on the display 341. In Step S103, the calculation unit 350 receives the correct moving path designated by the user. For example, the calculation unit 350 acquires a trajectory in which the user operates the input unit 342 and drags the diamond-shaped mark displayed at the start place to the star-shaped mark which is the destination as a correct moving path. At this time, the calculation unit 350 may correct the curve to a smooth curve by processing such as spline interpolation. Further, if the mobile robot cannot move along the trajectory due to the conditions of the mobile robot input as the basic conditions, the calculation unit 350 may prompt the user to input the conditions again.

In Step S104, the calculation unit 350 gives the teaching data generated in Steps S102 and S104 to the path-generating NN 200 that is learning, and executes the learning operation described above. Then, in Step S105, the calculation unit 350 checks, by the learning operation using the teaching data, whether the number of times the learning operation has been performed so far has reached the scheduled number of repetitions of the learning operation. That is, the calculation unit 350 checks whether learning of a predetermined number of teaching data has been completed. If the learning has not been completed, the process returns to Step S102 and a series of processes is repeated. If the learning has been completed, the process proceeds to Step S106.

In Step S106, the calculation unit 350 passes the path-generating NN 200 that has completed the first learning step to the mobile robot 100 via the communication unit 190. The path-generating NN 200 that has completed the first learning step has an ability to output a moving path in which the first obstacle is avoided if it receives the layout of the first obstacle arranged on the moving plane and the set start point and destination. The control unit 150 of the mobile robot 100 loads and implements the path-generating NN 200 into the memory 180 so that a machine learning program for performing the second learning step can be used.

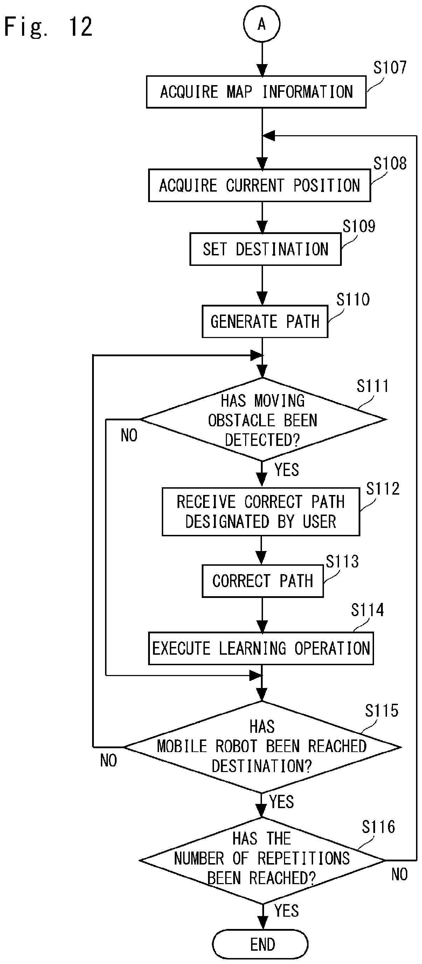

When the implementation of the path-generating NN 200, which has completed the first learning step, is completed, the mobile robot 100 performs the second learning step. Fig. 12 is a flowchart for mainly explaining processing performed in the second learning step in the machine learning method according to this embodiment. A method for performing learning of the path-generating NN 200 every time teaching data is obtained is described below.

In Step S107, the learning unit 151 acquires map information of a space in which the mobile robot 100 will perform the second learning step. The map information to be acquired here corresponds to the space set in Step S101. That is, the moving plane of the space in which the second learning step is performed has the same size as that of the moving plane in which the learning has been performed in the first learning step, and the map information to be acquired has the data structure described with reference to Fig. 5. Note that when the map information employing an expressive form other than the above one is acquired, the control unit 150 performs data conversion to match the data structure. Further, if there are a plurality of path-generating NNs 200 in which the areas of the target moving planes are different from each other in the memory 180, the learning unit 151 selects the path-generating NN 200 corresponding to the moving plane of the space in which the second learning step will be performed.

In Step S108, the learning unit 151 acquires the current position of the mobile robot 100. That is, the learning unit 151 identifies (i.e., determines) where the mobile robot 100 is located with respect to the map information acquired in Step S107. For example, the learning unit 151 compares the surrounding environment analyzed from the image acquired by the stereo camera 131 with the map information and then identifies the current position of the mobile robot 100.

Next, in Step S109, the learning unit 151 sets a cell randomly selected from the cells in which no first obstacles are arranged and the cells at the peripheral part of the first obstacles as a destination. Then, in Step S110, the learning unit 151 generates a moving path to the destination using the path-generating NN 200. Note that the values input to the path-generating NN 200 at this stage are the layout of the first obstacle shown in the acquired map information, the start point (the current position), and the destination, and no information about a second obstacle is given to the path-generating NN 200. Once the learning unit 151 generates a moving path, it transmits a drive signal to the movable-base drive unit 145 to move the mobile robot 100 along the moving path.

The learning unit 151 monitors whether the second obstacle, which is a moving obstacle, is located in the vicinity of the mobile robot during the movement of the mobile robot 100. Specifically, the learning unit 151 periodically analyzes images taken by the stereo camera 131 and signals output from the laser scanner 133 to detect the second obstacle located in the vicinity of the mobile robot. In Step S111, if the learning unit 151 determines that the second obstacle is not detected, the process proceeds to Step S115, and if it determines that the second obstacle is detected, the process proceeds to Step S112.

In Step S112, the learning unit 151 receives, from the user, a correct avoidance path or a correct avoidance direction for the detected second obstacle as described with reference to Fig. 8. Then, in Step S113, as described with reference to Fig. 9, the learning unit 151 corrects the moving path to the destination. The learning unit 151 prepares the teaching data assuming that the moving path corrected as described above is a correct answer when the original moving path, the relative position between the own robot and the second obstacle, the direction in which the second obstacle moves, and the moving speed of the second obstacle are input values. Once the teaching data is prepared, the process proceeds to Step S114, and the path-generating NN 200 is caused to perform learning by supervised learning. If learning using the teaching data is completed, the process proceeds to Step S115.

In Step S115, the learning unit 151 determines whether the mobile robot 100 has reached the destination set in Step S109. If the learning unit 151 determines that the mobile robot has not reached to the destination, the process returns to Step S111, and the mobile robot 100 continues to move to the destination. If the learning unit 151 determines that the mobile robot has reached to the destination, the process proceeds to Step S116. In Step S116, the learning unit 151 checks whether the number of times the learning operation has been performed in Step S114 so far has reached the scheduled number of repetitions of the learning operation. That is, the learning unit 151 checks whether learning of a predetermined number of teaching data has been completed. If the learning has not been completed, the process returns to Step S108 and a series of processes is repeated. If the learning has been completed, the second learning step is ended.

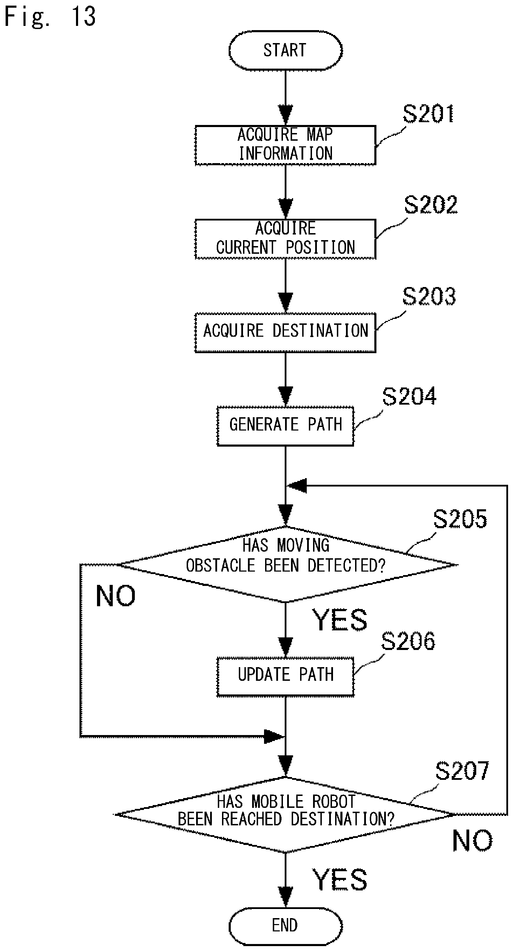

Next, how the learned path-generating NN 200 that has been learned as described above is used in the mobile robot 100 is described. Fig. 13 is a flowchart for explaining processing of an autonomous movement of the mobile robot 100 in which the learned path-generating NN 200 is implemented.

In Step S201, the control unit 150 of the mobile robot 100 acquires map information of a space in which the mobile robot 100 will autonomously move. If the map information to be acquired, similarly to the map information acquired in Step S107 of the second learning step, is map information describing the first obstacle, and the map information acquired in Step S107 can be used as it is, Step S201 may be skipped. In Step S202, similarly to the processing performed in Step S108 of the second learning step, the control unit 150 acquires the current position. In Step S203, the control unit 150 acquires the destination. Specifically, the control unit 150 receives an input of the destination from a user, extracts a point to which the mobile robot should move to execute a given task from the task and determines the extracted point as a destination, and so on. Note that the communication unit 190 that loads map information from the server 500 into the map DB 181 functions as an acquisition unit that acquires map information in cooperation with the control unit 150. Further, the input unit when the user inputs a destination or inputs a task functions as an acquisition unit that acquires the destination in cooperation with the control unit 150.

In Step S204, the control unit 150 reads the learned path-generating NN 200 from the memory 180. Then, the calculation unit 152 generates a moving path to the destination using the read path-generating NN 200. Note that the values input to the path-generating NN 200 at this stage are the layout of the first obstacle shown in the acquired map information, the start point (the current position), and the destination, and no information about a second obstacle is given to the path-generating NN 200. However, if the second obstacle has already been detected before the start of the movement, the relative position between the own robot and the second obstacle, the direction in which the second obstacle moves, and the moving speed of the second obstacle may be added to input values. Once the calculation unit 152 generates the moving path, the control unit 150 transmits a drive signal to the movable-base drive unit 145 to move the mobile robot 100 along the moving path.

The control unit 150 monitors whether the second obstacle, which is a moving obstacle, is located in the vicinity of the mobile robot during the movement of the mobile robot 100. Specifically, the control unit 150 periodically analyzes images taken by the stereo camera 131 and signals output from the laser scanner 133 to detect the second obstacle located in the vicinity of the mobile robot. In Step S205, if the control unit 150 determines that the second obstacle is not detected, the process proceeds to Step S207, and if it determines that the second obstacle is detected, the process proceeds to Step S206.

In Step S206, the calculation unit 152 updates the moving path to the destination using again the path-generating NN 200. The input values at this stage are the original moving path, the relative position between the own robot and the detected second obstacle, the direction in which the detected second obstacle moves, and the moving speed of the detected second obstacle. Once the moving path is updated, the control unit 150 transmits a drive signal to the movable-base drive unit 145 to move the mobile robot 100 along the updated moving path.

In Step S207, the control unit 150 determines whether the mobile robot 100 has reached the destination acquired in Step S203. If the control unit 150 determines that the mobile robot has not reached to the destination, the process returns to Step S205, and the mobile robot 100 continues to move to the destination. If the control unit 150 determines that the mobile robot has reached to the destination, it ends the series of processes for the movement.

Note that in the above-described processing flow, each time the second obstacle is detected in Step S205, the path is updated in Step S206. However, when it is determined that the detected second obstacle does not affect the movement of the mobile robot 100 along the original moving path, it is not necessary for the path to be updated. For example, when the second obstacle is moving in the direction away from the moving path of the mobile robot 100, the path is not updated.

In this embodiment described above, although teaching data for the second obstacle is generated by detecting an obstacle (second obstacle) that moves in a real environment in the second learning step, teaching data for a virtual second obstacle may be included. For example, the learning unit 151 generates, at various relative positions with respect to the own robot in various moving directions, virtual second obstacles moving at the same speed as the moving speed of the second obstacle acquired when the actual second obstacle is detected. The learning unit 151 handles such virtual second obstacles as obstacles that have been recognized like the real second obstacles. Then, the learning unit 151 displays the virtual second obstacles, for example, on the display panel 141 by CG. The user checks the second obstacles displayed by CG on the display panel 141 and provides an avoidance path or an avoidance direction for avoiding the second obstacles to the mobile robot 100. If teaching data is generated for a virtual second obstacle in this way, the learning effect of the path-generating NN 200 can be enhanced.

Further, by integrating the second learning step into the first learning step and performing all the processes by a simulation, it is possible to generate more teacher data pieces. Fig. 14 is an explanatory diagram for explaining generation of teaching data when all the processes are performed by a simulation. The simulation in this case is performed by the simulation PC 300 like in the case of the generation of the teaching data in the first learning step described with reference to Fig. 6.

The calculation unit 350 randomly arranges the first obstacle and the second obstacle on the moving plane in a virtual space divided into m × n cells (a first arrangement step). In Fig. 14, the first obstacle is indicated by hatching, and the second obstacle is indicated by a double circle mark. Further, the calculation unit 350 randomly determines positions of the start point and the destination and displays a diamond-shaped mark (the start point) and a star-shaped mark (the destination) (a second arrangement step). One or a plurality of first obstacles and second obstacles may be arranged. The start point is the current position of the mobile robot in an initial state. Like in the case of the first learning step described with reference to Fig. 6, the start point is selected and determined from among the cells in which no first obstacles are arranged, and the destination is selected and determined from among the cells in which no first obstacles are arranged and the cells at the peripheral part of the first obstacle. As described above, the first obstacle, the second obstacle, the start point, and the destination may be determined randomly, or may be determined based on a probability or an algorithm set in advance or dynamically.

The calculation unit 350 moves the second obstacle in accordance with a preset condition at the same time as the start of the simulation (a movement step). The direction in which the second obstacle moves and the moving speed of the second obstacle are set in advance, assuming that the second obstacle is an obstacle that can be actually located in a space in which the mobile robot is actually operated. In Fig. 14, the direction in which the second obstacle moves is schematically indicated by an arrow, but in a simulation, a double circle mark moves at a preset speed in the direction of the arrow.

The calculation unit 350 receives, from a user, a designation of a moving path from the start point to the destination while the first obstacle and the second obstacle are avoided (a reception step). Specifically, when the simulation starts and the second obstacle starts moving, the user is prompted to, for example, "enter the path from the start point to the destination" as shown in Fig. 14, he/she drags the diamond-shaped mark on the display 341 to move it to the star-shaped mark so that the diamond-shaped mark does not come into contact with the stationary first obstacle and the moving second obstacle. When the second obstacle approaches the diamond-shaped mark, the user stops the diamond-shaped mark temporarily or moves a detour path to avoid the second obstacle. The trajectory generated by dragging is displayed as a line. When the determination button is touched, the calculation unit 350 records this trajectory as a correct moving path determined by the user.

Note that in the first learning step described with reference to Fig. 6, as only the first obstacle is targeted, teaching data to be generated does not include a temporal element. However, in this simulation for avoiding the second obstacle while it is being moved, the teaching data includes temporal information as information indicating a movement of the second obstacle and a path for the mobile robot to avoid that second obstacle. That is, the teaching data includes enough information to learn the relative relation with the first obstacle and how to avoid the second obstacle when it approaches from a certain direction at a certain speed.

The calculation unit 350 causes the path-generating NN 200 to learn by supervised learning based on the teaching data accumulated as described above. If the learned path-generating NN 200 learned as described above is implemented in the mobile robot 100, the learning operation described with reference to Fig. 8 may not be performed. Alternatively, the workload of the learning operation described with reference to Fig. 8 can be reduced.

Note that in the reception step, when a moving path in which the mobile robot crosses the first obstacle is designated, the calculation unit 350 may partially correct the moving path so that the mobile robot does not cross the first obstacle again. If a somewhat rough designation is received, it can be expected that more teaching data pieces will be accumulated in a short period of time. Meanwhile, when a moving path in which the mobile robot comes into contact with the second obstacle is designated, a designation of a path by a user is received again. For example, the time is turned back before the mobile robot comes into contact with the second obstacle, and then the user is made to designate a path again. As the second obstacle is a moving obstacle, it is more appropriate to provide, as teaching data, an accurate avoidance path designated by the user.

Further, a score presenting step of, for the moving path of which the designation is received from the user in the reception step, calculating a score using, as an evaluation index, at least one of: a presence or absence of contact with the first and the second obstacles; a path distance from a contact position when the contact with the first and the second obstacles occurs to the destination; a distance from the first and the second obstacles to a path; a path distance of the moving path; smoothness of the moving path; and a time required to move the moving path, and presenting the score to the user may be included. The calculation unit 350 that calculates a score deducts points in accordance with the number of times of contact with the first and the second obstacles. Further, the shorter the path distance from the contact position to the destination becomes, the higher the score obtained. Further, if the distance from the first and the second obstacles to the path is short, points are deducted in view of safety. The shorter the path distance of the moving path from the start point to the destination becomes, the higher the score obtained. Furthermore, if the moving path from the start point to the destination is smooth, a high score is obtained. The shorter the time required to move the moving path becomes, the higher the score obtained. Presenting a user with such a score allows the user to actively enjoy the operation and have a competitive spirit, thereby making the user continuously perform a simulation. That is, a large amount of teaching data can be accumulated.

Further, the simulation described in this example may be performed after the first learning step described with reference to Fig. 6. Specifically, first, in the first learning step, a moving path from the start point to the destination can be generated when the first obstacle is provided. Then, a generation step of generating a temporary moving path in which the first obstacle is avoided from the start point to the destination is added between the second arrangement step and the movement step. In the movement step, the second obstacle is moved and the mobile robot is moved from the start point along the temporary moving path in accordance with a preset condition. In the reception step, when the diamond-shaped mark moving along the temporary moving path is likely to come into contact with the double circle mark, the movements of the diamond-shaped mark and the double circle mark are temporarily stopped, and the designation of an avoidance operation is received from a user. The calculation unit 350 generates a moving path as teaching data by incorporating the avoidance path that has been partially designated by a user into the original temporary moving path. By such a configuration, it is possible to perform learning of the path generation for avoiding the moving second obstacle in a concentrated manner, thereby improving the operation efficiency. Note that for the generation of the temporary moving path, instead of using the results of the first learning step, other algorithms or the like may be used.

The program(s) can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g., magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program(s) may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

From the disclosure thus described, it will be obvious that the embodiments of the disclosure may be varied in many ways. Such variations are not to be regarded as a departure from the scope of the disclosure, and all such modifications as would be obvious to one skilled in the art are intended for inclusion within the scope of the following claims.

## Claims

1. A neural network machine learning method for causing a computer to function so as to learn to output a path for a mobile robot (100) to reach a destination based on provided map information and information about a detected mobile body, the neural network machine learning method, comprising:
a first arrangement step of arranging a stationary first obstacle and a moving second obstacle in a virtual space;
a second arrangement step of arranging a current position and a destination of a mobile robot (100) in the virtual space;
a movement step of making the second obstacle move in accordance with a predetermined condition; and
a reception step of receiving, from a user, a designation of a moving path for the mobile robot (100) to go to the destination from the current position while avoiding the stationary first obstacle and the moving second obstacle, wherein
learning is performed using teaching data generated in each of the above steps and accumulated by repeatedly executing the above steps.

2. The neural network machine learning method according to Claim 1, wherein in the reception step, when the mobile robot (100) moving along the moving path designated by the user crosses the first obstacle, the moving path is corrected so that the mobile robot (100) does not cross the first obstacle again.

3. The neural network machine learning method according to Claim 1 or 2, wherein in the reception step, when the mobile robot (100) that moves along the moving path designated by the user comes into contact with the second obstacle, a designation of a moving path by the user is received again.

4. The neural network machine learning method according to any one of Claims 1 to 3, further comprising a generating step of generating a temporary moving path in which the first obstacle is avoided from the current position to the destination between the second arrangement step and the movement step, wherein
in the movement step, the second obstacle is moved and the mobile robot (100) is moved from the current position along the temporary moving path in accordance with a preset condition.

5. The neural network machine learning method according to any one of Claims 1 to 4, further comprising a score presenting step of, for the moving path of which the designation is received from the user in the reception step, calculating a score using, as an evaluation index, at least one of: a presence or absence of contact with the first and the second obstacles; a path distance from a contact position when the contact with the first and the second obstacles occurs to the destination; a distance from the first and the second obstacles to a path; a path distance of the moving path; smoothness of the moving path; and a time required to move the moving path, and presenting the score to the user.

6. A mobile robot (100) in which a learned neural network learned by the machine learning method according to any one of Claims 1 to 5 is implemented, the mobile robot (100) comprising:
an acquisition unit (190) configured to acquire map information in which a first obstacle is described, and a destination;
a detection unit (131, 133) configured to detect the second obstacle that moves in the vicinity of the mobile robot (100);
a calculation unit (152) configured to input the map information and the destination that are acquired by the acquisition unit (190) and detection information about the second obstacle detected by the detection unit (131, 133) to the learned neural network and calculate a path to reach the destination; and
a movement control unit (150) configured to control the mobile robot (100) so that it moves along the path calculated by the calculation unit (152).

## Patentansprüche

1. Maschinelles Lernverfahren für ein neuronales Netz, um einen Computer zu veranlassen, so zu funktionieren, dass er lernt, einen Weg für einen mobilen Roboter (100) auszugeben, damit dieser ein Ziel erreicht, basierend auf bereitgestellten Karteninformationen und Informationen über einen erkannten beweglichen Körper, wobei das maschinelle Lernverfahren für ein neuronales Netz Folgendes umfasst:
einen ersten Anordnungsschritt des Anordnens eines stationären ersten Hindernisses und eines sich bewegenden zweiten Hindernisses in einem virtuellen Raum,
einen zweiten Anordnungsschritt des Anordnens einer aktuellen Position und eines Ziels eines mobilen Roboters (100) in dem virtuellen Raum,
einen Bewegungsschritt des Bewirkens, dass sich das zweite Hindernis gemäß einer festgelegten Bedingung bewegt, und
einen Empfangsschritt des Empfangens einer Festlegung eines Bewegungsweges für den mobilen Roboter (100), um von der aktuellen Position zum Ziel zu gelangen, während er dem stationären ersten Hindernis und dem sich bewegenden zweiten Hindernis ausweicht, von einem Anwender, wobei
das Lernen mit Hilfe von Lehrdaten ausgeführt wird, die in jedem der vorstehenden Schritte erzeugt und durch wiederholtes Ausführen der vorstehenden Schritte angesammelt werden.

2. Maschinelles Lernverfahren für ein neuronales Netz nach Anspruch 1, wobei in dem Empfangsschritt, wenn der mobile Roboter (100), der sich entlang des von dem Anwender festgelegten Bewegungsweges bewegt, das erste Hindernis kreuzt, der Bewegungsweg derart korrigiert wird, dass der mobile Roboter (100) das erste Hindernis nicht erneut kreuzt.

3. Maschinelles Lernverfahren für ein neuronales Netz nach Anspruch 1 oder 2, wobei in dem Empfangsschritt, wenn der mobile Roboter (100), der sich entlang des von dem Anwender festgelegten Bewegungsweges bewegt, in Kontakt mit dem zweiten Hindernis kommt, erneut eine Festlegung eines Bewegungsweges durch den Anwender empfangen wird.

4. Maschinelles Lernverfahren für ein neuronales Netz nach einem der Ansprüche 1 bis 3, ferner einen Erzeugungsschritt des Erzeugens eines temporären Bewegungsweges von der aktuellen Position zu dem Ziel, bei dem dem ersten Hindernis ausgewichen wird, zwischen dem zweiten Anordnungsschritt und dem Bewegungsschritt umfassend, wobei
in dem Bewegungsschritt das zweite Hindernis bewegt wird und der mobile Roboter (100) von der aktuellen Position entlang des temporären Bewegungsweges gemäß einer voreingestellten Bedingung bewegt wird.

5. Maschinelles Lernverfahren für ein neuronales Netz nach einem der Ansprüche 1 bis 4, ferner einen Punktestanddarstellungsschritt des Berechnens eines Punktestandes für den Bewegungsweg, für den das Ziel in dem Empfangsschritt von dem Anwender empfangen wurde, mit Hilfe mindestens eines des Folgenden als ein Bewertungsindex umfassend: eines Vorhandenseins oder Nichtvorhandenseins von Kontakt mit dem ersten und dem zweiten Hindernis, einer Wegedistanz von einer Kontaktposition, an der der Kontakt mit dem ersten und dem zweiten Hindernis erfolgt, bis zu dem Ziel, einer Distanz von dem ersten und dem zweiten Hindernis zu einem Weg, einer Wegedistanz des Bewegungsweges, Glätte des Bewegungsweges und einer Zeit, die für die Bewegung entlang des Weges erforderlich ist, und Darstellen des Punktestandes für den Anwender.

6. Mobiler Roboter (100), in dem ein eingelerntes neuronales Netz implementiert ist, das von dem maschinellen Lernverfahren für ein neuronales Netz nach einem der Ansprüche 1 bis 5 eingelernt wurde, wobei der mobile Roboter (100) Folgendes umfasst:
eine Erfassungseinheit (190), die dafür konfiguriert ist, Karteninformationen, in denen ein erstes Hindernis beschrieben ist, und ein Ziel zu erfassen,
eine Erkennungseinheit (131, 133), die dafür konfiguriert ist, das zweite Hindernis zu erkennen, das sich in der Nähe des mobilen Roboters (100) bewegt,
eine Berechnungseinheit (152), die dafür konfiguriert ist, die Karteninformationen und das Ziel, die von der Erfassungseinheit (190) erfasst werden, und Erkennungsinformationen über das zweite Hindernis, das von der Erkennungseinheit (131, 133) erkannt wird, in das eingelernte neuronale Netz einzugeben und einen Weg zum Erreichen des Ziels zu berechnen, und
eine Bewegungssteuereinheit (150), die dafür konfiguriert ist, den mobilen Roboter (100) derart zu steuern, dass er sich entlang des Weges bewegt, der von der Berechnungseinheit (152) berechnet wurde.

## Revendications

1. Procédé d'apprentissage machine de réseau de neurones destiné à faire fonctionner un ordinateur pour qu'il apprenne à produire un trajet pour permettre à un robot mobile (100) d'atteindre une destination sur la base d'informations cartographiques fournies et d'informations concernant un corps mobile détecté, le procédé d'apprentissage machine de réseau de neurones comprenant :
une première étape d'agencement consistant à agencer un premier obstacle immobile et un deuxième obstacle en mouvement dans un espace virtuel ;
une deuxième étape d'agencement consistant à agencer une position actuelle et une destination d'un robot mobile (100) dans l'espace virtuel ;
une étape de déplacement consistant à déplacer le deuxième obstacle conformément à une condition prédéterminée ; et
une étape de réception consistant à recevoir, depuis un utilisateur, une désignation d'un trajet de déplacement permettant au robot mobile (100) de se rendre à la destination à partir de la position actuelle tout en évitant le premier obstacle immobile et le deuxième obstacle en mouvement,
l'apprentissage s'effectuant à l'aide de données d'entraînement générées à chacune des étapes ci-dessus et accumulées par exécution répétée des étapes ci-dessus.

2. Procédé d'apprentissage machine de réseau de neurones selon la revendication 1, dans lequel, à l'étape de réception, lorsque le robot mobile (100) se déplaçant le long du trajet de déplacement désigné par l'utilisateur croise le premier obstacle, le trajet de déplacement est corrigé de sorte que le robot mobile (100) ne recroise pas le premier obstacle.

3. Procédé d'apprentissage machine de réseau de neurones selon la revendication 1 ou 2, dans lequel, à l'étape de réception, lorsque le robot mobile (100) qui se déplace le long du trajet de déplacement désigné par l'utilisateur vient au contact du deuxième obstacle, une désignation d'un trajet de déplacement par l'utilisateur est à nouveau reçue.

4. Procédé d'apprentissage machine de réseau de neurones selon l'une quelconque des revendications 1 à 3, comprenant en outre une étape de génération consistant à générer un trajet de déplacement provisoire dans lequel le premier obstacle est évité depuis la position actuelle jusqu'à la destination entre la deuxième étape d'agencement et l'étape de déplacement,
à l'étape de déplacement, le deuxième obstacle étant déplacé et le robot mobile (100) étant déplacé depuis la position actuelle le long du trajet de déplacement provisoire conformément à une condition prédéfinie.

5. Procédé d'apprentissage machine de réseau de neurones selon l'une quelconque des revendications 1 à 4, comprenant en outre une étape de présentation de score consistant à, pour le trajet de déplacement dont la désignation est reçue depuis l'utilisateur à l'étape de réception, calculer un score en utilisant, comme indice d'évaluation, au moins un des éléments suivants : une présence ou une absence de contact avec le premier et le deuxième obstacle ; une distance de trajet depuis une position de contact, en cas de contact avec le premier et le deuxième obstacle, jusqu'à la destination ; une distance depuis le premier et le deuxième obstacle jusqu'à un trajet ; une distance de trajet du trajet de déplacement ; une fluidité du trajet de déplacement ; et une durée nécessaire au parcours du trajet de déplacement, et présenter le score à l'utilisateur.

6. Robot mobile (100) dans lequel est mis en œuvre un réseau de neurones appris, appris par le procédé d'apprentissage machine de réseau de neurones selon l'une quelconque des revendications 1 à 5, le robot mobile (100) comprenant :
une unité d'acquisition (190) configurée pour acquérir des informations cartographiques, dans lesquelles est décrit un premier obstacle, et une destination ;
une unité de détection (131, 133) configurée pour détecter le deuxième obstacle qui se déplace au voisinage du robot mobile (100) ;
une unité de calcul (152) configurée pour appliquer au réseau de neurones appris les informations cartographiques et la destination acquises par l'unité d'acquisition (190) et des informations de détection concernant le deuxième obstacle détecté par l'unité de détection (131, 133) et calculer un trajet pour atteindre la destination ; et
une unité de commande de déplacement (150) configurée pour commander le robot mobile (100) de façon à ce qu'il se déplace le long du trajet calculé par l'unité de calcul (152).
